# EUROPEAN PATENT APPLICATION

(11) **EP 2 515 226 A1**
(43) Date of publication of application: **24.10.2012**
(21) Application number: 11425113.5
(22) Date of filing: 21.04.2011
(51) Int. Cl.: G06F 5/08

(54) **An arrangement**

(71) Applicant: STMicroelectronics SA, 92120 Montrouge (FR); STMicroelectronics Srl, 20864 Agrate Brianza (IT)
(72) Inventor: Zid, Mounir, 5000 Monastir (TN); Scandurra, Alberto, 20041 Agrate Brianza (MB) (IT)
(74) Representative: Style, Kelda Camilla Karen

(57) **Abstract**

An arrangement comprising a plurality of data stores, each data store being configured to store data, and a controller arranged to selectively apply a clock signal to said respective data stores.

## Description

The present invention relates to an arrangement and in particular but not exclusively to an arrangement for use in a deserializer.

In an integrated circuit, a source of data may be configured to provide data to a destination. There may be a network-on-chip between the source of the data and the destination of the data. Data is required to be stored in memories and the transfer of the data is done in accordance with a specific protocol. Low frequency to high frequency domain data crossing should be achieved without data loss or duplication. With high density integration and high frequency clocking, power consumption may be raised.

According to an embodiment an arrangement comprises: a plurality of data stores, each data store being configured to store data; and a controller arranged to selectively apply a clock signal to said respective data stores.

The data stores may be arranged in series, comprising an input data store, an output data store and at least one data store arranged between said input data store and said output data store, said arrangement being configured to shift data through said series of data stores.

The controller may be configured to apply said clock signal to a register to cause said register to shift data to a next register.

The arrangement may comprise an output, said output configured to output data in said output data store to a recipient.

The controller may be configured to output a signal to said recipient indicating that said arrangement has data ready to be output.

The controller may be configured to receive a signal from said recipient if said recipient is ready for said output data.

The controller may be configured such that a data store to which no data is to be input and/or from which no data is to be output receives no clock signal.

The controller may comprises a plurality of controllers respectively associated with a respective one of said data stores.

At least one controller may be configured to control said associated register in dependence on at least one of the following: information indicating if valid data is present at an input of said associated register, information indicating if valid data is present in said associated register and information indicating if valid data is present in an register subsequent to said associated register.

The controllers may be configured to cause data to be transferred from one data store to the next data store.

At least one controller may be configured to cause data to be stalled in a data store.

At least one controller associated with a data store holding data and receiving information indicating data is at an input of said associated register may be configured to cause said data at the input of the associated register to be loaded.

At least one controller associated with a respective data store holding data may be configured to have one mode in which said controller is configured to provide information indicating said data store no longer holds valid data if no data is at an input of said associated data store.

At least one controller may be associated with a respective data store holding data and may have a shifting mode in which said controller is configured to control the associated data store to load data at its input regardless of the full/empty state of a subsequent register if data is at an input of said associated data store.

According to another embodiment, there is a deserializer comprising: a data convertor configured to convert a serial stream of data into a parallel format; and an arrangement as discussed above, said arrangement being configured to queue said parallel format data and to output said parallel format data.

Some embodiments will now be described by way of example only to the accompanying drawings in which:
Figure 1 schematically shows an integrated circuit;
Figure 2 shows the deserializer of Figure 1 in more detail;
Figure 3 shows the serializer of Figure 1 in more detail
Figure 4 shows a timing diagram associated with the arrangement of Figures 1 to 3;
Figure 5 schematically shows the interface of the deserializer of Figure 2;
Figure 6 shows an implementation of the interface of Figure 5; and
Figure 7 shows a controller.

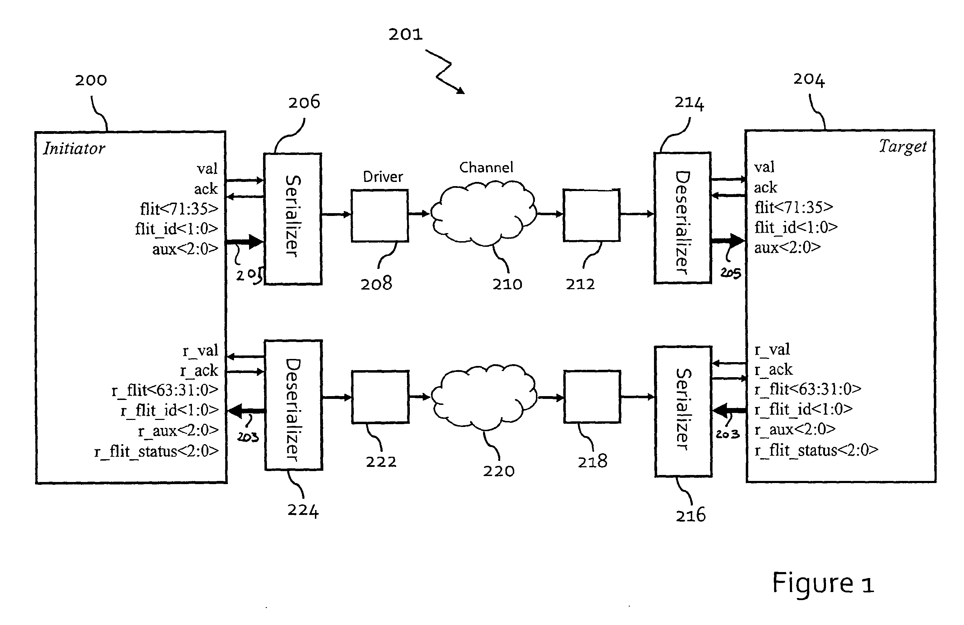

Reference is made to Figure 1 which schematically shows an integrated circuit 201 in which embodiments may be incorporated. The integrated circuit 201 has an initiator 200 which is arranged to communicate with a target 204. The initiator 200 will typically issue requests which are sent to the target 204 and the target 204 will typically respond to the requests. The responses are typically sent back to the initiator 200.

It should be appreciated that in practice, more than one initiator 200 may be provided and/or more than one target 204 may be provided. It should also be appreciated that a given initiator may be a target. Additionally or alternatively, a given target may also be an initiator.

The requests output by the initiator 200 are output in a parallel format to a first serializer 206 which converts the parallel format request into a serial form. The serialized data is output to a first driver 208 which put the data onto a first channel 210. The output end of the first channel is input to a trans impedance amplifier 212. The output of the amplifier is input to a first deserializer 214. The deserializer 214 processes the received serial stream back into the parallel format. The requests, in the parallel format, are output to the target 204.

A similar path is provided for the responses to the request. The responses output by the target 204 are output in a parallel format to a second serializer 216 which converts the parallel format response into a serial form. The serialized data is output to a driver 218 which put the data onto a second channel 220. The output end of the second channel is input to a driver 222. The output of the driver 222 is input to a second deserializer 224. The second deserializer 224 processes the received serial stream back into the parallel format. The responses, in the parallel format, are output to the initiator 200.

It should be appreciated that any suitable connection or coupling can be used for the channels 210 and 220. The channels may be provided by a wires, for example metal wires, optical interconnects or any other suitable connection environment or combination of two or more connection environments.

The request and the responses to the requests may comprise data, addressing information, control signals and/or instructions. At least part of the request and response may be in packet form. In other embodiments the data can be in any other suitable format. A signalling protocol may be used in some embodiments. For example, in one embodiment, a node sending data may send a valid signal and a node receiving data may send an associated acknowledgement signal. It should be appreciated that no protocol may be used and/or any other signalling protocol may be used in other embodiments.

In some embodiments the data is sent once the valid signal is high and the acknowledgement is confirmation of receipt of the data by the recipient. This valid/ acknowledgement protocol may be used between the initiator and the first serializer 206/second deserializer 224 and between the target and the first deserializer 214/second serializer 216.

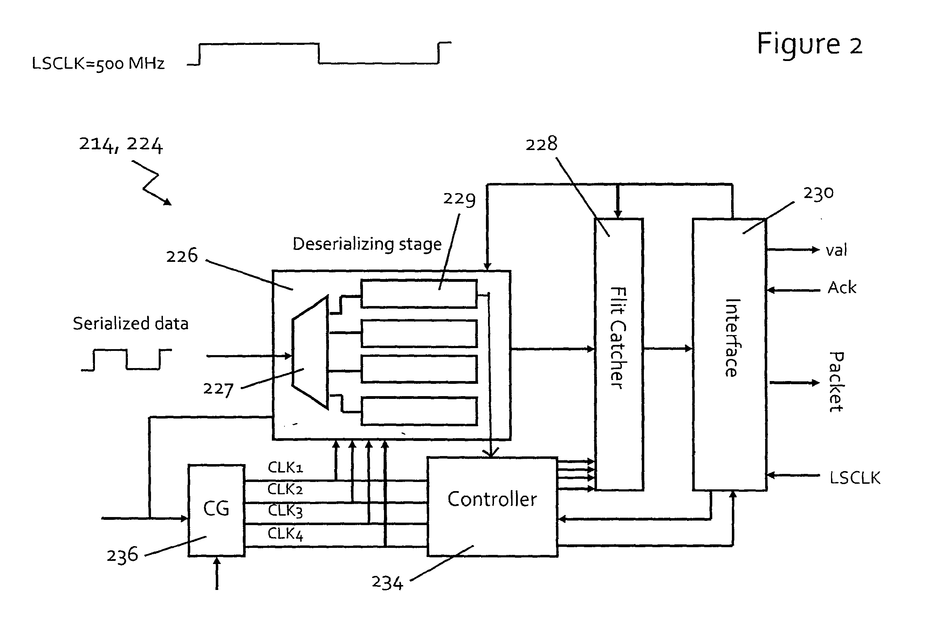

Reference is made to Figure 2 which shows the deserializer 214 or 224 in more detail. The serialised data is received by a deserializing stage 226. The deserializing stage has a demultiplexing arrangement 227 which divides the serialized data into the constituent channels which are deserialised registers 229. The output of the deserializing stage, in parallel format is loaded by a data catcher 228. The registers 229 are successively output into the data catcher which acts as a data buffer.

The output of the data catcher 228 is transferred to an interface 230 which will output the data in packet form. The interface 230 is also configured to implement the valid/acknowledgement protocol, generating the valid signal and receiving the acknowledgement signal. The interface receives a clock signal LSCLK which can be at any suitable frequency. By way of example only, the LSCLK may be at 500MHz. A four phase clock generator 236 is provided. The clock generator receives the output of a phase locked loop and generates four clock signals CLK1, CLK2, CLK3, and CLK4. The four clock signals have the same frequency but different phases. The four outputs of the clock generator 236 are input to the deserializing stage 226 and a controller 234. The controller receives an output from the deserializing stage 229 indicating when the data in the registers is ready for output and an output from the interface 230. The controller provides the four control signals to the data catcher 228 and provides a control output to the interface. The deserializing stage 226 also receives the output of the phase locked loop.

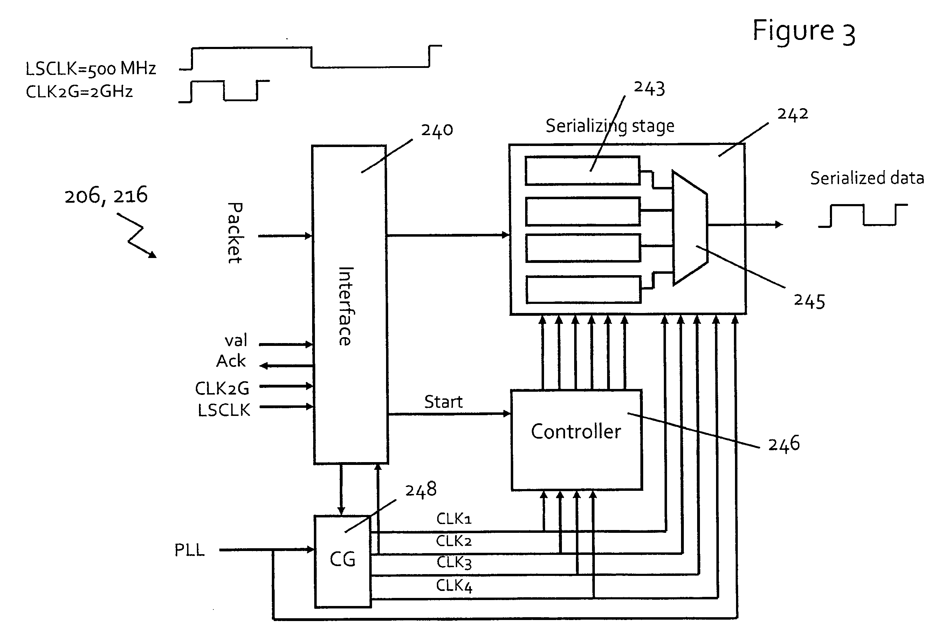

Reference is made to Figure 3 which shows the serializer 206 or 216 in more detail. The data in parallel format is received by an interface 240. The interface 240 is also configured to implement the valid/acknowledgement protocol, generating the acknowledgment signal in response to receiving the valid signal. The interface receives a clock signal LSCLK which can be at any suitable frequency. By way of example only, the LSCLK may be at 500MHz. The interface 240 receives further clock signals CLK2G which can be any suitable value and in example is 2GHz.

The data in parallel format is output by the interface 240 to a serializing stage 242. The serializing stage 242 is a quad parallel in serial out shift register, inside which each register loads a quarter of the data and serializes it. The registers 243 are each connected or coupled to a respective input of a multiplexing arrangement 245 which serializes the constituent channels into a serialized data stream.

A clock generator 248 is provided. The clock generator receives the output of a phase locked loop and generates four clock signals CLK1, CLK2, CLK3, and CLK4. The four clock signals have the same frequency but they are delayed each from the other by a 90 degrees phase shift.. The four outputs of the clock generator 248 are input to the serializing stage 242 and a controller 246. The clock generator receives an enable output from the interface 240. The controller provides the four clock signals to the serializing stage 242 and receives a start signal from the interface 240.

In some embodiments, a low power interface for an on-chip deserializer is provided. The interface allows data to be received from a low speed clock domain, store that data if required and transfer that data to a receiver by a four phase handshaking protocol. The interface may be implemented with a relatively low transistor count and consumes considerably low power. Low power is achieved by reducing at maximum the dynamic power by partial clock gating of register banks forming the queue of the Interface.

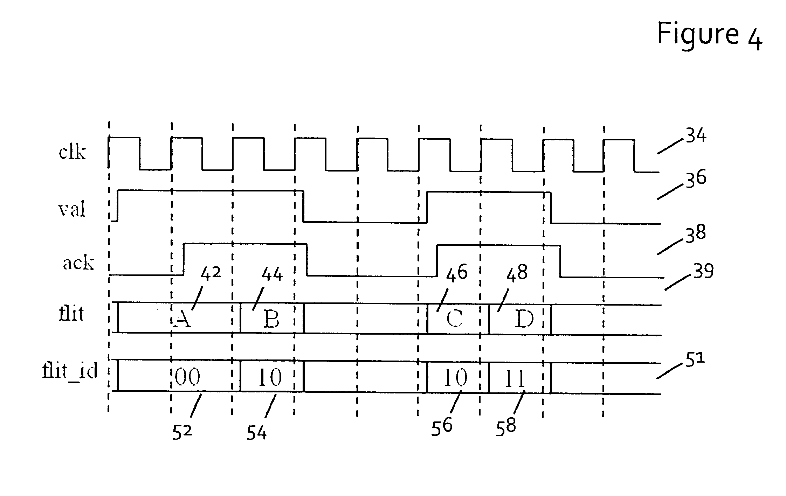

Reference is now made to Figure 4 which illustrates the timing in one embodiment. This is the timing associated with for example the deserializer or the serializer. The same four phase handshake protocol may be used when transferring FLITS from the initiator to the serializer or from the deserializer to the target. FLIT stands for FLow control **unIT** and may represent the smallest logic unit that can be exchanged between nodes and between IP blocks or functional blocks through the Network on Chip NoC interconnects. The FLITs may be composed of a NoC FLIT plus the additional control signals. From an initiator to target the FLIT is referenced 205 in Figure 1 and the FLITs regroup the FLIT (information content) plus flit_ld (flit identifier) plus aux (auxiliary bus indication for traffic boundaries such as end of packet). Target to initiator FLITs are similar to that FLIT and are referenced 203 in Figure 1. However it regroups further a r_flit_status control signal indicating traffic error information.

The first line of the timing diagram illustrates the clock signal 34. This low speed clock signal LS is the clock that feeds the initiator, the target and the nodes of the network on chip. In one embodiment, the LS clock frequency is 500 MHz.

The second line of the timing diagram shows the valid or request signal 36. The third line of Figure 4 shows the acknowledgment signal 38. The fourth line shows the data 39. The data is in burst form and comprises first data 42, second data 44, third data 46 and fourth data 48. As can be seen from Figure 4, there is a gap in time between the second data 44 and the third data 46. This is because the data may be bursty. Figure 4 also shows in the final line of the timing diagram the identity of the data. The first identity is referenced 52, the second 54, the third 56 and the fourth 58. This identity information corresponds in one embodiment, to the associated data. In one embodiment, the data identity is sent in parallel to the data. In another embodiment, the data identity may be provided as part of the data itself.

As can be seen, when the valid signal goes high, data can be transmitted. When the valid signal goes low, there is no transmission of data. It should be appreciated that the acknowledgment signal goes high shortly after the next rising edge after the rising edge which triggered the valid signal to go high. This will be provided in response to the beginning of the receipt of data. The acknowledgement signal will go low again shortly after the valid signal has dropped to low and the data transmission has stopped.

Some embodiments will need the capability to hold the reconstructed data until the receiver of that data, for example the initiator or the target becomes ready. Some embodiments may be configured to operate in a burst mode. Some embodiments are provided in order to ensure data flow control and may prevent data loss.

In some embodiments, there may be a trade off between memory depth, FLIT latency and area. There may also be an issue of power consumption. It may be desirable to used dual clocking and/or low power techniques.

Reference is now made again to Figure 2 which shows the deserializers 214, 224. The serialised data is received by the deserializing stage 229 which is configured to convert the data from serial format to parallel format. The output of the deserializing stage 229 is arranged to be received by the data catcher 228. The data catcher 228 is a register that loads the reconstructed FLITS. The output of the data catcher 228 is input to the interface 230 which outputs the data to receiver. There is a distinction between the data catcher and the registers used to construct the queue of the interface. The difference is that the data catcher loads the constructed FLITs quarter by quarter using four Catch signals as clock signals. However the register of the interface loads the FLIT form the data catcher using a single clock signal

The interface is configured to support a pseudo-synchronous handshake protocol for data flow control when communicating with the data catcher or the receivers (target, initiator or node). The interface is configured to support a burst mode of operation where the data is received in burst (as opposed to continuously). Some embodiments may additionally or alternatively support the continuous reception of data. In some embodiments, the interface is configured so that there is no loss of data. The interface may be configured to have automatic gating control. In some embodiments, n-fold data holders may be partially activated.

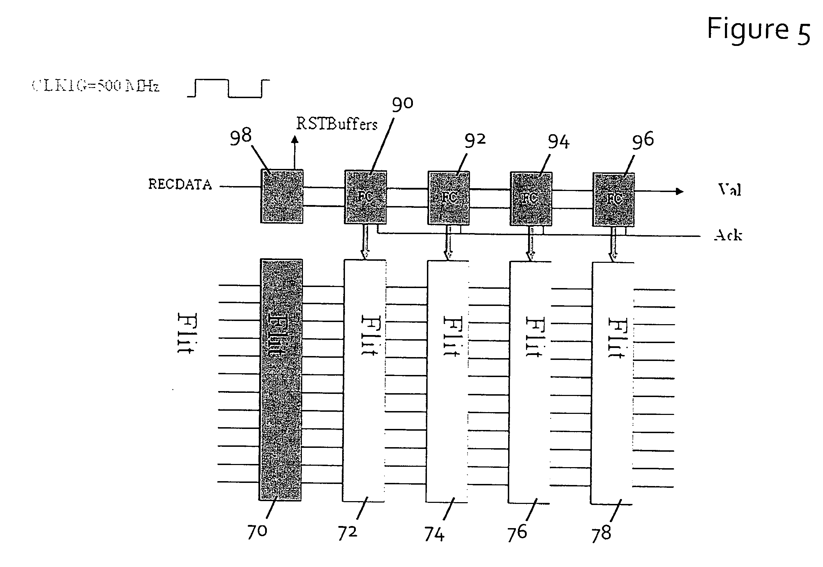

Reference is now made to Figure 5 which schematically shows the interface 230 in more detail. A series of storage locations 70, 72, 74, 76 and 78 are provided. The first data store 70 is configured to receive N parallel inputs so that the data store can store a FLIT. This parallel data is the serialised data which has been converted by the data converter into parallel form. The first data store 70 has N outputs which are coupled to the N respective inputs of the second data store 72. Similarly, the N outputs of the second data store72 are connected or coupled to the N inputs of the third data store 74. The N outputs of the third data store 74 provide the N inputs to the fourth data store 76. Finally, the N outputs of the fourth data store 76 are coupled to the N inputs of the fifth and final data store 78, the N outputs of which are output to the interface.

It should be appreciated that the number of data stores shown in Figure 5 is by way of example only and in different embodiments of the present invention a different number of data locations may be provided. Thus, input data can be shifted through the different data stores in turn. The second, third, fourth and fifth data locations are each provided with a flow controller 90, 92, 94 and 96 respectively. Each one of the flow controllers 90 to 96 is configured to receive the acknowledgment signal from the recipient of the data. Each flow controller is configured to provide an output which is able to enable its associated data store to load a new FLIT or not.

The final flow controller 96 is configured to provide the valid signal 18.

A flip flop 98 is provided. The output of this flip flop 98 provides a reset signal 100 which can be used to reset the the deserializer controller 234 and consequently the catcher 228 and the four stage deserializer 229.The flip flop 98 receives a RECDATA signal indicating that there is valid data waiting in the data catcher and provides outputs to the first flow controller.

The first flow to third flow controllers 90, 92, 94 are configured to provide outputs to the succeeding flow controller.

The operation of the data catcher shown in Figure 5 will now be described in more detail. First data is output from the deserializing stage 229 to catcher and then to the first data store 70. This rising clock edge causes the loading of the FLIT into the data store 70 and the transition to high of the reset signal 100. In the next clock cycle the data shifts to the second data store 72, in the following clock cycle to the third data store 74 and so on until it reaches the final data store 78. It should be appreciated that when the first data reaches the final data store, the valid signal is asserted. The valid signal is asserted only when the last data store 78 is holding a valid data.

In the meantime, second data has been received at the first data store. This can be in the clock cycle following the receipt of the first data or can in any later clock cycle. That second data is clocked through in successive clock cycles to the fourth data store 76. It should be appreciated that at this pointand in the case where the interface does not receive an Ack signal from the receiver, the first data will be retained in the last data store 78. Likewise, third data is received in a successive or any later clock cycle and is then clocked from the first data store 70 to the third data store, via the second data store 72 in successive clock cycles. Finally, fourth data is received in a successive or any later clock cycle which is clocked into the first data store 70 and then output to the second data store 72. Thus, in this scenario, the second to fifth data stores each have successive sets of data stored therein.

The flow controllers 90 to 96 are configured to control whether or not new data in a respective data store is loaded. The flow controller 96 associated with the fifth data store 78 is configured to control whether or not the data is output to the initiator. The flow controller 96 is configured to hold the data until such time that an acknowledgment is received from the receiver (that can be an Initiator, a target or a Node)

The individual flow controllers are thus able to control whether or not the data in that storage location is shifted. If no new data is received in a clock cycle, only the data store(s) which need to be activated to output/receive data will receive the clock signal. This reduces the switching activity in the other data stores and hence it mitigates power consumption and noise.

The flow controllers will thus disable the clocks of the respective data store if the data in that data store does not need to be shifted or if there is no data to be input to that data store. This will be done for each clock cycle. This arrangement is able to support burst data. In any clock cycle, none, one, some or all of the data stores will be activated by having a clock signal controlled to be applied thereto by the respective flow controller.

The arrangement allows first data to be input and clocked through to the fifth data store. That first data can be stored until the recipient is ready to receive that data. In the meantime, second data can be received and clocked through to the fourth data store, where again that data can be stored until it is ready to be received. In one embodiment, data which is received is clocked on successive clock cycles to the register closest to the output which is empty. Any register which is not required to be activated will remain inactive as discussed above.

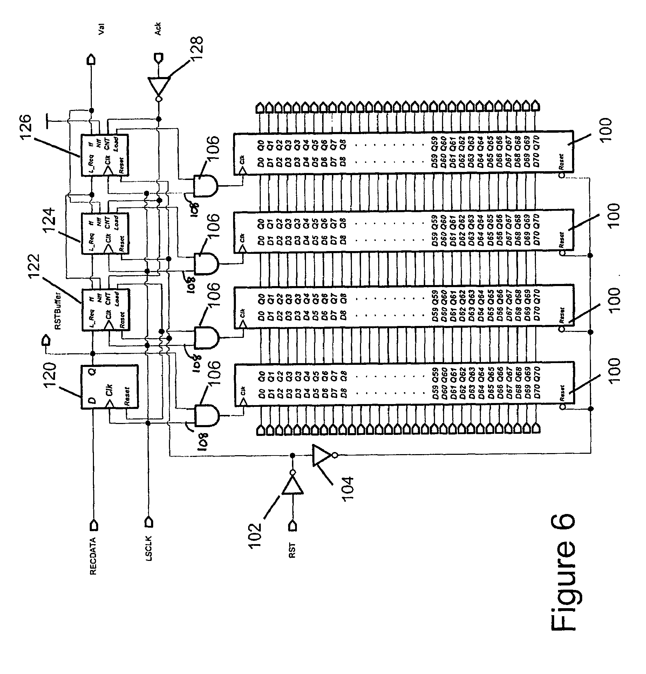

An acknowledgement signal received from the recipient is input to each of the flow controllers 90 to 96. Once the valid signal is asserted, in successive clock cycles, the data in the fifth data store is output to the recipient. Simultaneously, the data which was in the fourth data store 76 is shifted into the fifth data store, the data in the third data store 74 is shifted into the fourth data store 76 and the data which was in the second data store is shifted into the third data store. Thus, on successive clock cycles a set of data is clocked out of the interface and into, for example, the initiator. Reference is made to Figure 6. An example of an implementation of the arrangement of Figure 5 is shown. As can be seen, the depth of the interface is equal to four and each of the data stores comprises an n fold flip flop 100 (corresponding for example to four respective ones of the data stores of Figure 5). Figure 5 is thus the general architecture and it shows that the interface functions according to the same principle regardless the number of n fold DFFs. Figure 6 is one implementation in which the number of registers is four.

As can be seen, each of the inputs to each data store comprises n D inputs and n Q outputs. Additionally, each of the n stage flip flops 100 is configured to receive a reset signal. The reset signal is provided to the n stage flip flops 100 via a first inverter 102 and a second inverter 104 arranged in series. The first and second inverters 100 and 102 are used for signal integrity and logical effort purpose.

Each of the n fold flip flops 100 is arranged to receive a clock signal input from a respective AND gate 106. The AND gates each have a first input 108 connected to a clock signal 110. The first AND gate 106, the output of which is connected to the first n fold flip flop 100 (corresponding to flip flop 98 of Figure 5) has its input connected to the Q output of a first flip flop 120 which corresponds the master controller 98. The first flip flop 120 receives the clock input from the clock signal 110, a reset signal from the load output of the first flow controller 122. The D input of the first flip flop is arranged to receive the RECDATA input. In response to the determination that data has been received, the first flip flop 120 is configured to control the first N stage flip flop 100 to store the received data. When the RECDATA signal is high, the Q signal is high. RSTBuffer (provided by the Q output of the first flip flop 120) becomes high so that input to the first AND gate is high. Accordingly, when the clock signal input to the first AND gate is high, this means that data can be clocked into and/or out of the first N stage flip flop 100. Having the RSTBuffer signal high means that the interface is requesting the controller to reset the data catcher and the shift register of the deserializer since data is now stored in the first register.

If the second N stage flip flop 100 is empty, the next clock cycle will result in the transition to high of both of the output signal ff and Load of the respective controller 122. The load signal serves to enable the gating of the clock that feeds the second N flip flop register to load the data from the first register. This means that when the data has been acknowledged, the reset is asserted and the Q output goes low. The ff signal serves to indicate a request for data transfer for the next stage register. The third and fourth N stage flip flops and their respective controllers 124 and 126 operate in the same manner.

It should be appreciated that the Q output of the first flip flop 120 is used to provide a signal to the reset buffers which is used to reset the Controller 234 and consequently to reset the Catcher 228 and the Deserializing stage 229

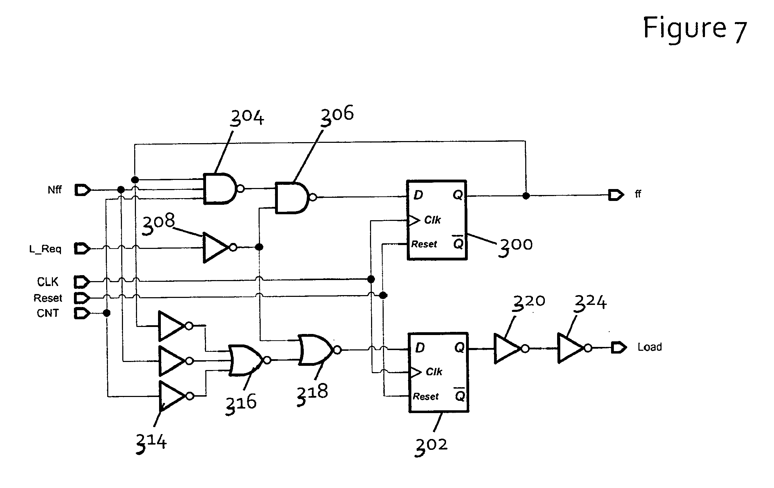

In Figure 6, there are three blocks 122, 124 and 126. These blocks will be described in more detail with reference to figure 7.

By controlling the input to the respective AND gate, the AND gate controls whether or not the clock signal is passed to the respective n fold flip-flop. If the clock signal is enabled, then data can be input and/or output from the n fold flip-flop. If the clock signal is not enabled, the n fold flip flop register is not clocked and the data stall in its position in the queue.

The interface may be low power and the dynamic power consumed is reduced since each n flip flop is self timed. The interface communicates by handshaking on both sides making possible its usage for low speed domain to high speed domain data crossing.

A controller for controlling the n fold flip-flop is now described with reference to figure 7. Figure 7 represents the blocks shown in Figure 6 which are referenced 122, 124 and 126.

The arrangement shown in figure 7 provides a controller which allows communication with similar neighbouring blocks using a pseudo-synchronous handshaking protocol data flow control which may avoid data obliteration. A controller output automatically provides an enable signal for the gating cell to prevent unnecessary gating of for example of the n fold flip-flop. The decision is calculated according to the request of the source stage, its own state as well as the next stage state. The arrangement which will be described has a small area and relatively low power consumption. In some embodiments, such an arrangement can be used to implement a relatively low power FIFO, pipeline and queuing elements for networks on chip and/or low power interfaces as shown in figure 6. Some embodiments may save power where there is an absence of data to be held.

The arrangement shown in figure 7 comprises a first NAND gate 304 which arranged to receive a first input from the Q output of a first flip-flop 300. The NAND gate receives a second input Nff (NNF is the full flag of the next similar controller) and a third control input CNT. The CNT signal is used to force the controller to enable the gating of the corresponding n fold flip flop. This input allows the selection between the normal mode and the shifting mode of the controller. The output of the first NAND gate 304 is provided to a first input of a second NAND gate 306. The second NAND gate 306 receives an input from the output of a first inverter 308 which receives L_{Req} signal The output of the first inverter is also connected to a second NOR gate 318. The other input to the second NOR gate 318 is provided by the output of a first NOR gate 316. The NOR gate 316 receives three inputs respectively from a second inverter 310, a third inverter 312 and a fourth inverter 314. The second inverter 310 receives the Q output of the first flip-flop 200. The third inverter 312 receives the Nff input whilst the fourth inverter receives the control input CNT.

The output of the second NAND gate 306 is provided to D input of the first flip-flop 300. The clock input of the first flip-flop 300 receives the clock signal and the reset input is connected to the reset signal.

A second flip-flop 302 is provided which receives the output of the second NOR gate 318 as its D input. The clock input receives the clock signal and the reset input is connected to the reset signal. The Q output of the first flip-flop provides the ff signal. The ff signal is the full flag indicator. When the n fold flip flop controlled by this controller holds a valid data the ff signal is maintained to high state, else the signal is maintained at a low state.

The Q output of the second flip-flop is provided to a sixth inverter 320 the output of which is provided to a seventh inverter 324. The inverters form a buffer used to strengthen the effort of the output of the flip flop 302.The output of the seventh inventor provides the load signal. It should be appreciated that the load request signal L_{Req} comprises the Q output in the case of the first controller 122, of the first flip-flop 120. In the case of the controllers 124 and 126, the load request signal comprises the ff output of the preceding controller.

The arrangement shown in Figure 7 is used to control a data register of n bits of the queue of the interface. In an initial condition, the load output is low, the LReq request signal is low (indicating that there is no data in the preceding register), CNT is high (for normal mode operation) and the current register does not hold valid data. This means that the ff signal of the current controller is at low state. The output of the NAND gate 304 is then at a high state and the outputs of the NAND gate 306, the NOR Gate 316 and the NOR gate 318 are at a low state. Thus, at each clock cycle and provided that LReq signal remain low, the ff and the Load outputs of the controller outputs a 0 logic. The register is not clocked and the controller continues to indicate that the corresponding register does not holds valid data.

The LReq signal passes to a high state to indicate the presence of valid data at the input of the current register. This makes the NAND gate 306 and the NOR gate 318 output a 1 logic. The rising edge of the clock signal will cause the transition from low to high of both the ff and Load signals. The clock gating of the register is enabled letting the register load the data at its input which validity is indicated by the ff signal being held at the high state. This signal is also used as a LReq signal for the next register stage controller.

Consider the following three cases. In the first case, the next register is holding valid data. The ff flag of this next controller is used as an Nff input for the current controller. In this situation NAND gate 306 outputs a 1 logic while the NOR gate 318 outputs a 0 logic regardless of the state of the LReq signal. The next clock event will cause the transition to low of the Load signal of the current register without affecting the ff state that remains at a high state. This mean that the register is not clocked and that the data stalls in its position without being erased. As consequence, if the data in the second register stalls, the data in the current register stalls too. The current and next register hold valid data and their Load signal remains at a low state to prevent data shifting.

In the second case where the next register is not holding valid data (Nff=0) and LReq remains high, the NAND gate 306 and the NOR gate 318 outputs a 1 logic meaning that in the next clock event the ff and the load signal will remain high and consequently new data is loaded into the current register. At the same time Nff goes to high because the next register loaded the old data held by the current register.

The third case is when Nff is at a low state and LReq is at a low state. The NAND gate 306 and the NOR gate 318 outputs a 0 logic meaning that in the next clock event the ff and the load signals will go low and consequently the current register is not clocked and no longer holds valid data. At the same time, Nff goes to high because the next register is loaded with the old data held by the current register. In all these cases the CNT signal is considered to be at a high state. This is to make the controller operate in a normal mode as described above.

In normal mode, an issue may appear during the propagation of data inside the queue. For example consider three empty registers controlled by three controllers. Suppose that in the first clock cycle the current register loads a first FLIT. If a second FLIT is available at the input of the first register, this FLIT will be loaded in the second clock cycle and the first FLIT will be simultaneously loaded into the second register. If a third FLIT is available at the input of the first register, this flit will not be loaded by this register in the next clock cycle. During this clock cycle the second FLIT is loaded by the second register and the first FLIT is loaded by the third register. Thus the second FLIT is still held by the first register and it is so far considered as a valid FLIT which may result in data duplication. The first FLIT continues to propagate correctly through the queue but the second FLIT continues to be duplicated. As a result in n clock cycles the first FLIT reaches the register n and all the registers from 1 to n-1 are frozen and hold the second FLIT. The CNT signal is used to address this by forcing the controller to operate in a shifting mode. When the CNT signal is low and after the clock event, the ff and Load output signals of the controller follow the Input LReq. Thus, a controller holding valid data and receiving a high LReq signal maintains its ff and Load output signals high to load the available data at the input of the register regardless of the full/empty state of the register that comes later. A controller holding valid data but receiving a low LReq signal forces both the ff and load signals to low to indicate that the register no longer holds valid data. This means each FLIT is transferred from one register to another making all the stored data shift at the same time through the queue without being duplicated. Only controllers indicating valid data and/or receiving a high LReq signal may be sensitive to the CNT signal.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. An arrangement comprising:
a plurality of data stores, each data store being configured to store data; and
a controller arranged to selectively apply a clock signal to said respective data stores.

2. An arrangement as claimed in claim 1, wherein said data stores are arranged in series, comprising an input data store, an output data store and at least one data store arranged between said input data store and said output data store, said arrangement being configured to shift data through said series of data stores.

3. An arrangement as claimed in claim 2, wherein said controller is configured to apply said clock signal to a register to cause said register to shift data to a next register.

4. An arrangement as claimed in claim 2 or 3 comprising an output, said output configured to output data in said output data store to a recipient.

5. An arrangement as claimed in claim 4, wherein said controller is configured to output a signal to said recipient indicating that said arrangement has data ready to be output.

6. An arrangement as claimed in claim 4 or 5, wherein said controller is configured to receive a signal from said recipient if said recipient is ready for said output data.

7. An arrangement as claimed in any preceding claim, wherein said controller is configured such that a data store to which no data is to be input and/or from which no data is to be output receives no clock signal.

8. An arrangement as claimed in any preceding claim, wherein said controller comprises a plurality of controllers respectively associated with a respective one of said data stores.

9. An arrangement as claimed in claim 8, wherein at least one controller is configured to control said associated register in dependence on at least one of the following: information indicating if valid data is present at an input of said associated register; information indicating if valid data is present in said associated register; and information indicating if valid data is present in an register subsequent to said associated register.

10. An arrangement as claimed in claim 8 or 9, wherein said controllers are configured to cause data to be transferred from one data store to the next data store.

11. An arrangement as claimed in claim 8, 9 or 10 wherein at least one controller is configured to cause data to be stalled in a data store.

12. An arrangement as claimed in any of claims 8 to 11, wherein at least one controller associated with a data store holding data and receiving information indicating data is at an input of said associated register is configured to cause said data at the input of the associated register to be loaded.

13. An arrangement as claimed in any of claims 8 to 12, wherein at least one controller associated with a respective data store holding data is configured to have one mode in which said controller is configured to provide information indicating said data store no longer holds valid data if no data is at an input of said associated data store.

14. An arrangement as claimed in any of claims 8 to 13, wherein at least one controller associated with a respective data store holding data is configured to have a shifting mode in which said controller is configured to control the associated data store to load data at its input regardless of the full/empty state of a subsequent register if data is at an input of said associated data store.

15. A deserializer comprising:
a data convertor configured to convert a serial stream of data into a parallel format; and
an arrangement as claimed in any preceding claim, said arrangement being configured to queue said parallel format data and to output said parallel format data.
